# EUROPEAN PATENT APPLICATION

(11) **EP 4 741 209 A1**
(43) Date of publication of application: **13.05.2026**
(21) Application number: 25200784.4
(22) Date of filing: 08.09.2025
(51) Int. Cl.: B60L 3/12, B60L 15/20, B60L 15/30, B60L 15/34

(54) **CONTROL DEVICE AND CONTROL METHOD OF VEHICLE**

(30) Priority: 07.11.2024 JP 2024194833
(71) Applicant: TOYOTA JIDOSHA KABUSHIKI KAISHA, Toyota-shi, Aichi-ken 471-8571 (JP)
(72) Inventor: HAREYAMA, Yohei, TOYOTA-SHI, AICHI-KEN, 471-8571 (JP)
(74) Representative: Cabinet Beau de Loménie

(57) **Abstract**

When there is an execution request for on-demand driving control that simulates driving of a virtual drivable vehicle in response to a request from an occupant of a vehicle (100), if the on-demand driving control includes a first control that is executed under a first driving condition of the vehicle (100), the first control is executed when the first driving condition is satisfied. When there is the execution request for on-demand driving control, if an original driving control implemented in the vehicle (100) includes a second control that is executed under a second driving condition of the vehicle (100), and the on-demand driving control does not include a driving control corresponding to the second control, the second control is executed when the second driving condition is satisfied.

## Description

### TECHNICAL FIELD

The present disclosure relates to a device and a method for controlling a vehicle driven by an electric motor.

### BACKGROUND

JP2018191366A discloses technology for producing a pseudo-shift change in a vehicle driven by an electric motor. In the related art, it is determined whether an upshift condition or a downshift condition or the vehicle is satisfied based on internal information of the vehicle, such as vehicle speed, accelerator position, and brake depression amount. When it is determined that the upshift condition or the downshift condition is satisfied, control is executed to fluctuate carrier frequency of an inverter that supplies power to the electric motor by a set amount.

### LIST OF RELATED ART

Following is a list of patent literatures which the applicant has noticed as related arts of the present invention.

Patent Literature 1: JP2018191366A

The carrier frequency fluctuation control in the related art is not included in actual drive control of the electric motor. Therefore, there is no conflict between the execution of the drive control of the electric motor and that of the carrier frequency fluctuation control. However, when driving control implemented in a vehicle for a specific purpose shares a common control content with original driving control already implemented in the vehicle, and execution conditions of both driving controls are satisfied, there is a possibility that these driving controls may conflict with each other.

In particular, the inventor of the present disclosure envisions performing driving control using multiple vehicle models corresponding to each of various virtual drivable vehicles, with an aim of giving a driver of the vehicle experiences of riding in the various virtual drivable vehicles. Here, to improve the reproducibility of driving by a certain virtual drivable vehicle, it is desirable to implement a vehicle model that realizes the driving control implemented in this virtual drivable vehicle in the vehicle itself. In this case, however, there is a high possibility that the driving control realized by one of the vehicle models will conflict with the original driving control already implemented in the vehicle.

This present disclosure addresses the above problems. One of the objectives of the present disclosure is to provide technology to avoid conflicts between the driving control realized by the vehicle model corresponding to the virtual drivable vehicle and the original driving control already implemented in the vehicle, in the vehicle powered by the electric motor.

### SUMMARY

A first aspect of the present disclosure is a control device for a vehicle powered by an electric motor. The control device includes one or more memory devices and one or more processing circuitry. The one or more memory devices store a program for an original driving control implemented in the vehicle, and a vehicle model for on-demand driving control that simulates the driving of a virtual drivable vehicle in response to a request from an occupant of the vehicle. The one or more processing circuitry is configured to execute the original driving control or the on-demand driving control. The one or more processing circuitry is configured to, when there is an execution request for the on-demand driving control, if the on-demand driving control includes a first control executed under a first driving condition of the vehicle, execute the first control when the first driving condition is satisfied, and, when there is the execution request, if the original driving control includes a second control executed under a second driving condition of the vehicle and the on-demand driving control does not include driving control corresponding to the second control, execute the second control when the second driving condition is satisfied.

A second aspect of the present disclosure is a control method for a vehicle powered by an electric motor. The control method causes a computer to execute an original driving control implemented in the vehicle or an on-demand driving control that simulates driving of a virtual drivable vehicle in response to a request from an occupant of the vehicle. When there is an execution request for the on-demand driving control, if the on-demand driving control includes a first control executed under a first driving condition of the vehicle, the computer executes the first control when the first driving condition is satisfied, and when there is the execution request, if the original driving control includes a second control executed under a second driving condition of the vehicle and the on-demand driving control does not include driving control corresponding to the second control, the computer executes the second control when the second driving condition is satisfied.

When there is the execution request for on-demand driving control, if the on-demand driving control includes the first control that is executed under the first driving condition, the original driving control includes the second control that is executed under the second driving condition, and if the first driving condition and the second driving condition are common, the first control and the second control may conflict with each other. In this regard, according to the present disclosure, if the on-demand driving control includes the first control, the first control is executed when the first driving condition is satisfied. In addition, if the original driving control includes the second control that is executed under the second driving condition and the on-demand driving control does not include the driving control corresponding to the second control, the second control is executed when the second driving condition is satisfied. Therefore, it is possible to select one of the first and second controls and execute the selected one appropriately. Note that the "driving control corresponding to the second control" means the on-demand driving control that is executed under driving conditions that are common to the second driving condition.

### BRIEF DESCRIPTION OF DRAWINGS

FIG. 1 is a diagram showing an example configuration of a vehicle according to an embodiment of the present disclosure;
FIG. 2 is a diagram showing a configuration example of motor control function of a control device;
FIG. 3 is a diagram showing a configuration example of a vehicle model;
FIG. 4 is a diagram showing a configuration example of sound control function of the control device;
FIG. 5 is a diagram showing a configuration example of motor control function of the control device for executing first control and second control;
FIG. 6 is an example of a time chart when the first and second controls correspond to hill-climb control;
FIG. 7 is an example of a time chart when the second control corresponds to the hill-climb control and there is no driving control equivalent to the hill-climb control in the on-demand driving control;
FIG. 8 is a flowchart showing an example of computer processing executed for an arbitration between the first control and second control; and
FIG. 9 is a flowchart showing an example of computer processing executed for the arbitration between the first control and the second control.

### DESCRIPTION OF EMBODIMENT

An embodiment of the present disclosure will be described below with reference to drawings. Note that the same or corresponding parts in each drawing are given the same signs and their explanations are simplified or omitted.

### 1. Configuration example

### 1-1. Configuration example of power system

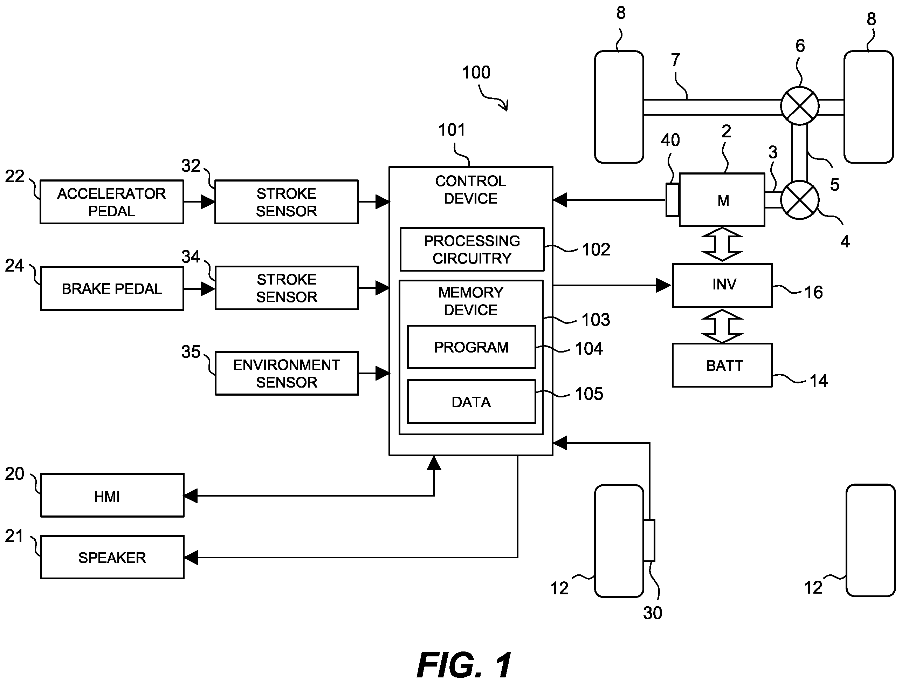

FIG. 1 is a diagram showing an example configuration of a vehicle according to an embodiment of the present disclosure. In the example shown in FIG. 1, a vehicle 100 is equipped with an electric motor (M) 2 as a driving source. The electric motor 2 is, for example, a three-phase AC motor. An output shaft 3 of the electric motor 2 is connected to one end of a propeller shaft 5 via a gear mechanism 4. The other end of the propeller shaft 5 is connected via a differential gear 6 to a drive shaft 7 at the front of the vehicle 100.

The vehicle 100 also has front drive wheels 8 and rear driven wheels 12. The drive wheels 8 are provided at both ends of the drive shaft 7. That is, the vehicle 100 is a FF vehicle in which the front wheels are driven by a single electric motor 2. However, the vehicle 100 may also be a vehicle in which two electric motors are arranged at the front and rear to drive the front wheels and the rear wheels, respectively. The vehicle 100 may be a vehicle equipped with an in-wheel motor on each wheel.

The vehicle 100 further includes a battery (BATT) 14 and an inverter (INV) 16. The battery 14 stores electrical energy to drive the electric motor 2. That is, the vehicle 100 is a battery vehicle (BEV) that runs on electric energy stored in a battery 14. However, the vehicle 100 may also be a hybrid vehicle (HEV) that has a mode by which the vehicle 100 travels only on the driving force of the electric motor, a plug-in hybrid vehicle (PHEV), or a fuel cell vehicle (FCEV) that supplies electric energy generated by a fuel cell to an electric motor. The inverter 16 is, for example, a voltage type inverter. The inverter 16 controls the motor torque output by the electric motor 2 through PWM control.

### 1-2. Configuration example of control system

In the example shown in figure 1, the vehicle 100 is equipped with an accelerator pedal stroke sensor 32. An accelerator pedal stroke sensor 32 is provided on an accelerator pedal 22 and outputs a signal indicating the operation state of the accelerator pedal 22. The accelerator pedal operation state typically includes the accelerator position and the accelerator opening speed. The vehicle 100 also includes a brake pedal stroke sensor 34. The brake pedal stroke sensor 34 is provided on a brake pedal 24 and outputs a signal indicating the operation state of the brake pedal 24. An operating state of the brake pedal 24 typically includes the brake opening degree and the brake opening speed. The accelerator pedal 22 and the brake pedal 24 are operating members for driving and braking the vehicle 100, respectively. The vehicle 100 may further include various driving operation members, such as a steering wheel for steering the vehicle 100.

The vehicle 100 is also equipped with a driving environment sensor 35. The driving environment sensor 35 is a sensor for detecting the driving environment of the vehicle 100. Examples of the driving environment sensor 35 include a camera, a radar, a LiDAR, and a Global Navigation Satellite System (GNSS) receiver. The vehicle 100 further includes a rotational speed sensor 40. The rotation speed sensor 40 is provided in the electric motor 2 and outputs a signal indicating the rotation speed of the electric motor 2.

The vehicle 100 also includes an HMI (Human Machine Interface) 20 as a user interface, and a speaker 21. The HMI 20 presents various information to a driver of the vehicle 100 and also accepts various inputs from the driver. The HMI 20 includes a display, switches, and the like. For example, the HMI 20 displays various information on the display and receives input from the driver regarding the displayed information through switch operations. Furthermore, when the HMI 20 is configured with a touch screen, various information is displayed on the touch screen and input from the driver regarding the displayed content is accepted by touch operations. The speaker 21 outputs sound within the vehicle 100. In particular, the speaker 21 is capable of outputting a pseudo engine sound, which will be described later. The speaker 21 may be configured as a part of the HMI 20.

The vehicle 100 also includes a control device 101. Various sensors and devices to be controlled mounted on the vehicle 100 are connected to the control device 101 via an in-vehicle network such as a Controller Area Network (CAN). In addition to the vehicle speed sensor 30, the accelerator pedal stroke sensor 32, the brake pedal stroke sensor 34, and the rotation speed sensor 40 described above, the various sensors may be mounted on the vehicle 100 and connected to the control device 101 via the in-vehicle network.

The control device 101 generates control signals related to various controls on the vehicle 100 based on the signals acquired from the various sensors. The control device 101 is typically composed of an ECU (Electric Control Unit). The control device 101 may be a combination of multiple ECUs. The control device 101 includes one or more processors 102 and one or more memory devices 103. In the following description, the one or more processors 102 may also be referred to as a "processor 102," and the one or more memory devices 103 may also be referred to as a "memory device 103."

The processor 102 executes various processing. The processor 102 may be, for example, a general-purpose processor, a specific-purpose processor, a central processing unit (CPU), a graphics processing unit (GPU), an application specific integrated circuit (ASIC), a field-programmable gate array (FPGA), an integrated circuit, a conventional circuit, or a combination of one or more of these. A processor, which includes transistors and other circuitry, is an example of the processor 102. The processor 102 may also be referred to as circuitry or processing circuitry. The circuitry is hardware that is programmed to provide the functions described in the present disclosure, or that performs those functions.

The memory device 103 stores various information necessary for the processor 102 to execute the processing. The memory device 103 is composed of a recording medium such as a random access memory (RAM), a read only memory (ROM), a solid state drive (SSD), or a hard disk drive (HDD). The memory device 103 stores a program 104 that can be executed by the processor 102 and various data 105. The program 104 is made up of a number of instructions that describe the processing that the processor 102 is to carry out. The program 104 may be recorded in a computer-readable recording medium. The function of the control device 101 is realized by cooperation between the processor 102 that executes the program 104 and the memory device 103.

The control device 101 has at least two control modes for driving control of the vehicle 100: an original mode and an on-demand mode. The driving control of the vehicle 100 executed by the control device 101 changes depending on the control mode selected by the driver of the vehicle 100 (hereinafter, also referred to as the "selected mode"). The control modes of the vehicle 100 will now be described.

The original mode is a control mode in which the vehicle 100 is driven as a normal BEV. When the original mode is selected, the control device 101 performs driving control of the vehicle 100 such that the vehicle 100 operates as the normal BEV. On the other hand, the on-demand mode is a control mode in which the vehicle 100 reproduces the operation of a mobility (hereinafter also referred to as a "selected vehicle") selected by the driver from among multiple virtual drivable vehicles. When the on-demand mode is selected, the control device 101 performs driving control of the vehicle 100 such that the driver feels as if he or she is driving the selected vehicle. The various controls of the vehicle 100 in the original mode and the on-demand mode will be described in detail later.

The multiple virtual drivable vehicles include various vehicles with different acceleration characteristics in response to the driving operation of the driver. Each of the multiple virtual drivable vehicle may be an assumed mobility in the real world (e.g., an engine vehicle or a hybrid vehicle), or may be an assumed mobility that does not exist in the real world. The differences in acceleration characteristics are generally due to differences in the powertrain configuration from the driving source to the drive wheels and differences in the powertrain control methods. Therefore, the multiple virtual drivable vehicles can be considered to include various mobilities that differ in at least some elements that affect the difference in acceleration characteristics.

The control mode is selected when the driver operates the HMI 20. The HMI 20 receives an input regarding the control mode from the driver. The HMI 20 also receives input from the driver regarding the selected vehicle in the on-demand mode. The control device 101 performs the driving control of the vehicle 100 according to the selected control mode (i.e., the selected mode).

### 2. Example of function configuration of control device

### 2-1. Motor control function

Regarding the driving control of the vehicle 100, the control device 101 functions as a motor control device that controls the electric motor 2 in response to the driving operation by the driver. In detail, the processor 102 executes the program 104 for controlling an electric motor stored in the memory device 103, such that the control device 101 functions as a motor control device. The motor control function of the control device 101 will be described below.

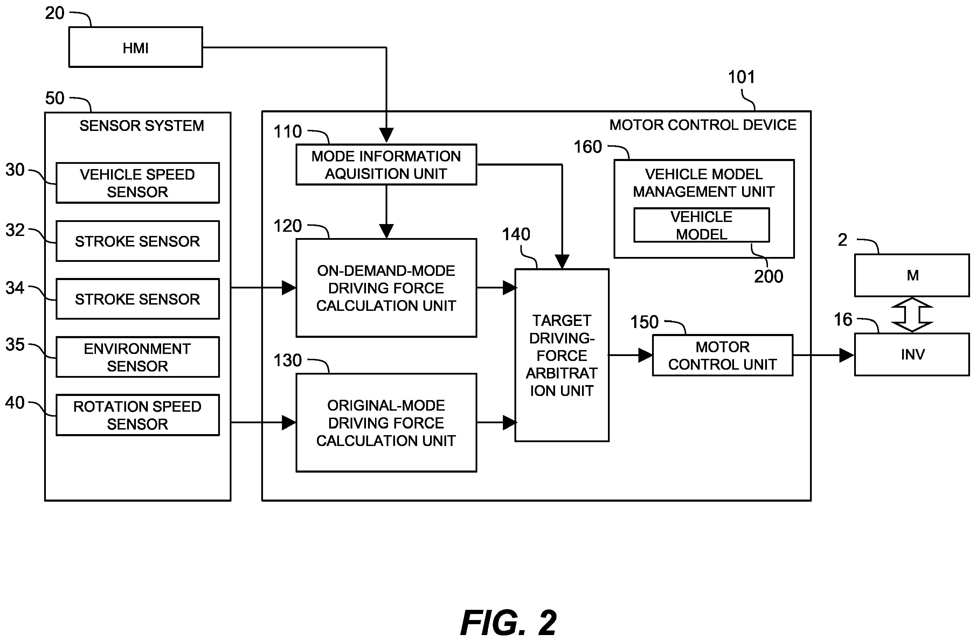

FIG. 2 is a diagram showing a configuration example of motor control function of the control device 101. The control device (the motor control device) 101 calculates a target driving force of the vehicle 100 in response to the driving operation of the driver. Then, the control device 101 controls the electric motor 2 via the inverter 16 so as to apply the calculated target driving force to the vehicle 100.

The signals from the HMI 20 and the sensor system 50 are input to the control device 101. The sensor system 50 includes the vehicle speed sensor 30, the accelerator pedal stroke sensor 32, the brake pedal stroke sensor 34, the driving environment sensor 35, the rotation speed sensor 40, and the like. The sensor system 50 may include other sensors not shown. For example, the sensor system 50 may include a steering angle sensor for detecting the steering angle of the steering wheel, a yaw rate sensor for detecting the yaw rate of the vehicle 100, an IMU (Inertial Measurement Unit) for detecting the attitude of the vehicle 100, etc.

The signal input from the HMI 20 to the control device 101 includes at least one of a signal indicating the control mode selected by the driver (i.e., the selected mode) and a signal indicating the virtual drivable vehicle selected by the driver (i.e., the selected vehicle). The signals input from the sensor system 50 to the control device 101 include a signal indicating the vehicle speed of the vehicle 100, a signal indicating the operation state of the accelerator pedal 22, a signal indicating the operation state of the brake pedal 24, a signal indicating the driving environment of the vehicle 100, and a signal indicating the rotational speed of the electric motor 2.

The control device 101 includes a mode information acquisition unit 110, an on-demand-mode driving-force calculation unit 120, an original-mode driving-force calculation unit 130, a target driving-force arbitration unit 140, an electric motor control unit 150, and a vehicle model management unit 160 as blocks for realizing the motor control function. These function blocks are realized by cooperation between the processor 102 that executes the program 104 and the memory device 103.

The mode information acquisition unit 110 receives the signal from the HMI 20 and acquires information on the selected mode. The mode information acquisition unit 110 also acquires information about the selected vehicle. The mode information acquisition unit 110 further transmits information about the selected mode to the target driving-force arbitration unit 140. When the information about the selected vehicle has been acquired, the mode information acquisition unit 110 transmits this information to the on-demand-mode driving-force calculation unit 120.

The on-demand-mode driving-force calculation unit 120 acquires the information about the selected vehicle from the mode information acquisition unit 110. Then, the on-demand-mode driving-force calculation unit 120 calculates the target driving force in the on-demand mode based on the signal from the sensor system 50 and a vehicle model 200 of the selected vehicle read out from the vehicle model management unit 160. In other words, the on-demand-mode driving-force calculation unit 120 calculates the target driving force for reproducing in the vehicle 100 the acceleration feeling of the selected vehicle in response to the driving operation of the driver. For example, the on-demand-mode driving-force calculation unit 120 uses the vehicle model 200 of the selected vehicle to calculate a virtual acceleration when the selected vehicle is being driven. Then, the on-demand-mode driving-force calculation unit 120 calculates the target driving force such that the acceleration of the vehicle 100 becomes the virtual acceleration.

The original-mode driving-force calculation unit 130 calculates the target driving force in the original mode based on the signal from the sensor system 50. That is, the original-mode driving-force calculation unit 130 calculates the target driving force for operating the vehicle 100 as the normal BEV. For example, the original-mode driving-force calculation unit 130 calculates the target driving force using a map having parameters of the accelerator position of the accelerator pedal 22 and the rotation speed of the electric motor 2. The original-mode driving-force calculation unit 130 can also calculate the target driving force using the brake opening degree of the brake pedal 24 as a parameter.

The target driving-force arbitration unit 140 arbitrates the target driving force of the vehicle 100 to be used in controlling the electric motor 2. The target driving-force arbitration unit 140 acquires, for example, information on the selected mode from the mode information acquisition unit 110, and determines the target driving force of the vehicle 100 based on this information. That is, when the on-demand mode is selected, the target driving-force arbitration unit 140 transmits the target driving force calculated by the on-demand-mode driving-force calculation unit 120 to the electric motor control unit 150 as the target driving force of the vehicle 100. If the original mode is selected, the target driving-force arbitration unit 140 transmits the target driving force calculated by the original-mode driving-force calculation unit 130 to the electric motor control unit 150 as the target driving force for the vehicle 100.

When the on-demand mode is selected, the target driving-force arbitration unit 140 may transmit the target driving force calculated by the original-mode driving-force calculation unit 130 to the electric motor control unit 150 as the target driving force of the vehicle 100. In other words, even if the on-demand mode is selected, the target driving-force arbitration unit 140 may use the target driving force calculated by the original-mode driving-force calculation unit 130 as the target driving force for the vehicle 100, rather than the target driving force calculated by the on-demand-mode driving-force calculation unit 120.

The target driving force of vehicle 100 is input to the electric motor control unit 150 via the target driving-force arbitration unit 140. The electric motor control unit 150 changes the motor torque output by the electric motor 2 so as to impart the input target driving force to the vehicle 100. More specifically, the electric motor control unit 150 generates a control signal for the inverter 16 in response to the target driving force input to the electric motor control unit 150. Then, the electric motor control unit 150 changes the motor torque output by the electric motor 2 through PWM control by the inverter 16.

In this manner, the control device 101 controls the electric motor 2 to apply the target driving force to the vehicle 100. Therefore, when the target driving force calculated by the on-demand-mode driving-force calculation unit 120 is input to the electric motor control unit 150, the acceleration characteristics of the vehicle 100 become acceleration characteristics that simulate the acceleration characteristics of the selected vehicle. When the target driving force calculated by the original-mode driving-force calculation unit 130 is input to the electric motor control unit 150, the acceleration characteristics of the vehicle 100 become those of the normal BEV.

The vehicle model management unit 160 stores a plurality of vehicle models 200. The vehicle model management unit 160 is mainly realized by the memory device 103. Each vehicle model 200 is a model of the multiple virtual drivable vehicles. These vehicle models 200 are managed, for example, in a database. The database of the vehicle model 200 is included in the various data 105 stored in the memory device 103.

Each vehicle model 200 is a model that simulates a behavior of a virtual drivable vehicle in response to the driving operation of the driver using the operation state of the accelerator pedal 22 (e.g., the accelerator position) and the driving state of the vehicle 100 (e.g., the vehicle speed) as its input. Each vehicle model 200 is configured to be capable of simulating at least the driving force applied to the virtual drivable vehicle in response to the driving operation, particularly the operation of the accelerator pedal 22, and the acceleration and deceleration operations of the virtual drivable vehicle resulting from the action of the driving force.

Typically, each vehicle model 200 is composed of a control model that simulates a control system related to the powertrain of the virtual drivable vehicle, and a plant model that simulates the acceleration and deceleration operations of the virtual drivable vehicle in response to control signals from the control model. In this case, the plant model includes a model of a powertrain that operates based on a control signal from the control model, and a model for simulating the operation of a virtual drivable vehicle due to the operation of a virtual driving force output by the powertrain model. An example of the configuration of the vehicle model 200 will be described later.

Each vehicle model 200 has parameters related to the operation of the virtual drivable vehicle in a simulation. The parameters include a vehicle weight, a tire diameter, each gear ratio, an engine maximum torque, an engine torque responsiveness, a gear shift timing, and so on. The parameters may differ for each vehicle model. The vehicle model 200 represents a model of one virtual drivable vehicle by combining with the set values of the parameters.

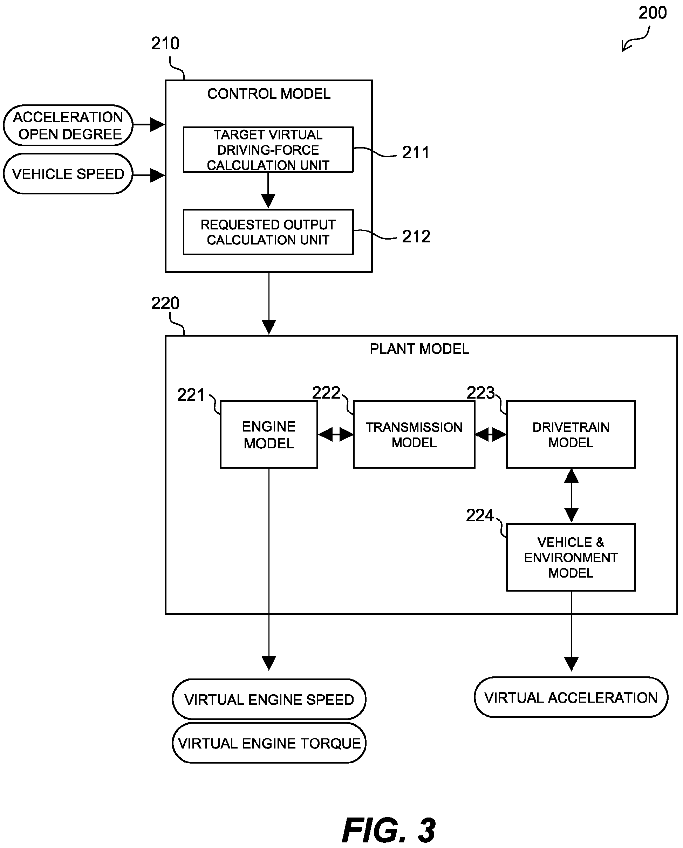

FIG. 3 is a diagram showing a configuration example of the vehicle model 200. In the example shown in FIG. 3, the vehicle model 200 includes a control model 210 and a plant model 220. The control model 210 simulates a control system associated with the powertrain of the virtual drivable vehicle. The plant model 220 simulates the acceleration and deceleration operations of the virtual drivable vehicle in response to the control signals from the control model 210. The plant model 220 includes a model of a powertrain that operates based on a control signal from the control model 210, and a model for simulating the operation of the virtual drivable vehicle due to the operation of a virtual driving force output by the powertrain model. The control model 210 can also be said to simulate a control system that calculates the requested output for the powertrain of the virtual drivable vehicle. It can also be said that the plant model 220 simulates the physical constraints on the requested output of the powertrain.

The specifications of the control model 210 and the plant model 220 vary depending on the type of the powertrain system. For example, the configurations of the control system, transmission, and driving system are different between the engine vehicle and the hybrid vehicle. For this reason, the vehicle model 200 of the engine vehicle and the vehicle model 200 of the hybrid vehicle each have different specifications for both the control model 210 and the plant model 220. The example shown in FIG. 3 shows a case where the virtual drivable vehicle is an automatic transmission (AT) vehicle equipped with an engine.

The control model 210 includes a target virtual driving-force calculation unit 211 and a requested output calculation unit 212. The target virtual driving-force calculation unit 211 calculates a virtual driving force (a target virtual driving force) required at the output of the powertrain of the virtual drivable vehicle based on the accelerator position and the vehicle speed. For example, the target virtual driving-force calculation unit 211 performs calculations using a map that gives a target virtual driving force for a combination of accelerator position and vehicle speed. The requested output calculation unit 212 calculates the requested output for the powertrain to meet the calculated target virtual driving force. The requested output calculated includes the target engine torque of the internal combustion engine and the target gear of the transmission. The control model 210 sends the calculated requested output to the plant model 220.

The plant model 220 includes an engine model 221, a transmission model 222, a drivetrain model 223, and a vehicle and environment model 224. The engine model 221, the transmission model 222, and the drivetrain model 223 are models of the powertrain from the driving source to the drive wheels. The vehicle and environment model 224 is a model for simulating the operation of the virtual drivable vehicle due to the operation of the virtual driving force output by the powertrain model.

The engine model 221 is a model of the internal combustion engine equipped in the virtual drivable vehicle. The engine model 221 simulates, for example, the operation of an internal combustion engine in response to the input of a target engine torque. The engine model 221 outputs virtual engine speed and virtual engine torque. In the engine model 221, parameters that can be changed depending on the selected vehicle include, for example, the maximum engine torque, the engine torque responsiveness, and the like.

The transmission model 222 is a model of the transmission equipped in the virtual drivable vehicle. The transmission model 222 simulates, for example, the operation of the transmission in response to the input of a target gear position. The transmission model 222 outputs a virtual transmission output torque from the virtual engine torque output by the engine model 221 and a gear ratio determined by a virtual gear position. The transmission model 222 includes a stepped transmission model that simulates a stepped transmission and a continuously variable transmission model that simulates a continuously variable transmission. Depending on the selected vehicle, either a stepped transmission model or a continuously variable transmission model will be selected. In the transmission model 222, parameters that can be changed depending on the selected vehicle include, for example, each gear ratio, gear shift timing, and the like. In the case of the stepped transmission model, the gear ratio means the gear ratio of eac9ooh gear stage.

The drivetrain model 223 is a model of the driving system of the virtual drivable vehicle. In the drivetrain model 223, for example, the mechanical structure from the transmission to the drive wheels is modeled. The drivetrain model 223 calculates the drive wheels torque using the virtual transmission output torque output by the transmission model 222 and a predetermined reduction ratio, and outputs the virtual driving force of the virtual drivable vehicle. In the drivetrain model 223, parameters that can be changed depending on the selected vehicle include, for example, the reduction ratio and the maximum allowable torque of the propeller shaft.

The vehicle and environment model 224 is a model that represents the dynamic characteristics of the virtual drivable vehicle and the driving environment of the virtual drivable vehicle. The vehicle and environment model 224 calculates the driving resistance applied to the virtual drivable vehicle from the driving environment of the virtual drivable vehicle. The vehicle and environment model 224 simulates the acceleration and deceleration operations of the virtual drivable vehicle based on the virtual driving force output from the drivetrain model 223, the calculated running resistance, and the dynamic characteristics of the virtual drivable vehicle. The vehicle and environment model 224 outputs a virtual acceleration based on the acceleration and deceleration operations of the virtual drivable vehicle. In the vehicle and environment model 224, parameters that can be changed depending on the selected vehicle include, for example, the vehicle weight, the tire diameter, and the CD value.

### 2-2. Sound control function

Regarding the driving control of the vehicle 100, the control device 101 also functions as a sound control device that controls the speaker 21 so as to output an engine sound (hereinafter also referred to as a "virtual engine sound") generated by an engine vehicle as the selected vehicle. In detail, the processor 102 executes the program 104 for sound control stored in the memory device 103, such that the control device 101 functions as the sound control device. The sound control function of the control device 101 will be described below.

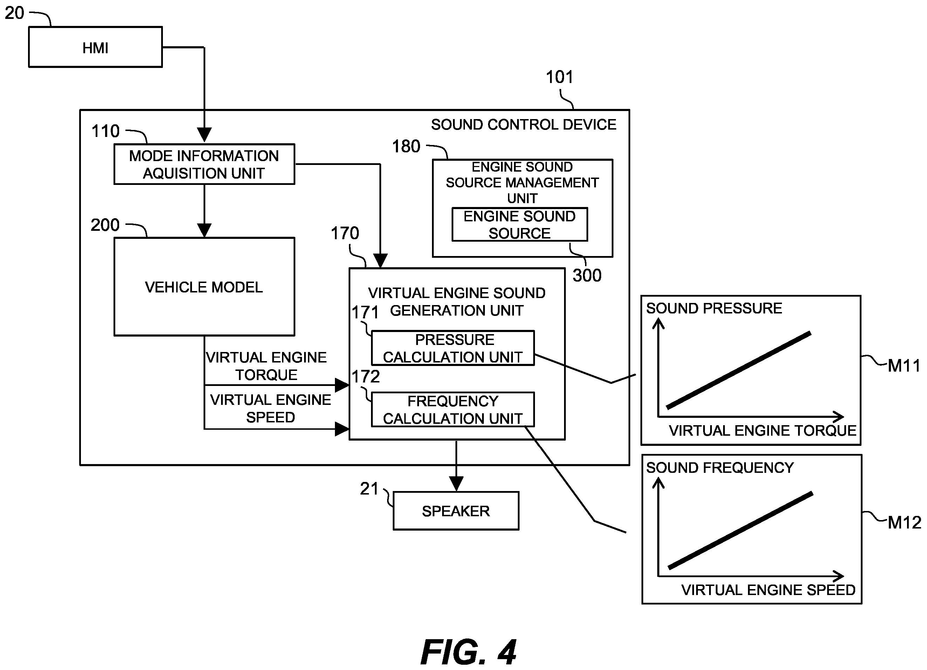

FIG. 4 is a diagram showing a configuration example of the sound control function of the control device 101. The control device 101 includes the mode information acquisition unit 110 and a virtual engine sound generation unit 170 as blocks for realizing the sound control function. These function blocks are realized by cooperation between the processor 102 that executes the program 104 and the memory device 103.

The mode information acquisition unit 110 receives a signal from the HMI 20 and acquires information on the selected vehicle and the selected mode. If the mode information acquisition unit 110 has acquired information on the selected vehicle, the mode information acquisition unit 110 also transmits this information to the virtual engine sound generation unit 170.

The virtual engine sound generation unit 170 functions when the selected mode is the on-demand mode and the selected vehicle is the engine vehicle. At this time, the control device 100 reads out the vehicle model 200 of the selected vehicle based on the information of the selected vehicle from the mode information acquisition unit 110, and sets parameters according to this selected vehicle. The virtual engine sound generation unit 170 generates the virtual engine sound based on the virtual engine torque and virtual engine speed calculated using the vehicle model 200 of the selected vehicle, and the engine sound source 300 of the selected vehicle read out from an engine sound source management unit 180.

The virtual engine sound generation unit 170 includes a sound pressure calculation unit 171 that calculates the engine sound pressure, and a sound frequency calculation unit 172 that calculates the frequency of the engine sound. The sound pressure calculation unit 171 calculates the sound pressure of the virtual engine sound from the virtual engine torque by using a sound pressure map M11. The sound pressure map M11 is a control map created such that the sound pressure increases as the virtual engine torque becomes larger. The sound frequency calculation unit 172 calculates the frequency of the virtual engine sound from the virtual engine speed using a frequency map M12. The frequency map M12 is a control map created such that the frequency increases as the virtual engine speed increases.

The control device 101 outputs the virtual engine sound generated by the virtual engine sound generation unit 170 from the speaker 21. In this manner, the sound control by the control device 101 makes it possible, when the selected mode is the on-demand mode and the selected vehicle is the engine vehicle, to give the driver a sensation as if the driver is driving an engine vehicle as the selected vehicle.

### 3. Driving control when on-demand mode is selected

### 3-1. Mediation between first control and second control

The vehicle 100 in which the selected mode is switched between the original mode and the on-demand mode means that the execution request for the driving control of the vehicle 100 in the original mode and that for the driving control of the vehicle 100 in the on-demand mode can be switched in accordance with the intention of the driver.

When the original mode is selected, the driving control of the vehicle 100 is not executed in the on-demand mode. This is because in this case there is no information about the selected vehicle, and the vehicle model 200 of the selected vehicle cannot be specified. However, when the on-demand mode is selected, the processing for the driving control of the vehicle 100 in the on-demand mode and that in the original mode are carried out simultaneously. That is, the processing for the on-demand driving control according to the vehicle model 200 of the selected vehicle and that for the original driving control according to the program 104 are executed simultaneously.

In the following, the case where the on-demand mode is selected will be considered. In this case, the on-demand driving control and the original driving control may conflict with each other. In this regard, the function of the target driving-force arbitration unit 140 described in FIG. 2 is to arbitrate between the target driving force of the vehicle 100 calculated according to the vehicle model 200 of the selected vehicle and that calculated according to the program 104. Therefore, this arbitration function makes it possible to make a decision such as prohibiting the execution of the original driving control and permitting the execution of the on-demand driving control.

In particular, when the execution condition of the on-demand driving control and that of the original driving control are common, there is a possibility that the execution conditions of these driving controls will be activated at the same time. In this regard, according to the arbitration function described above, even if these execution conditions are activated at the same time, it is possible to make a decision to prohibit the execution of the original driving control and to execute the on-demand driving control. Hereinafter, the on-demand driving control that is activated under a "first driving condition" will be referred to as a "first control." In addition, the driving control that is an original driving control and is activated under a "second driving condition" is referred to as a "second control."

The first driving condition and the second driving condition may be common. The term "common" as used herein refers not only to a case where at least one condition composing of the driving conditions is the same, but also to a case where a part of the at least one condition is different between the driving conditions. Examples of cases where at least one condition is different include cases where a type, value, unit, a threshold, or the like of a condition parameter is different. If a control content of the first control is common to that of the second control, the first driving condition and the second driving condition are likely to be common. The term "common" in this context means that a control content is the same in at least one of their intent and purpose.

In the embodiment, in a case where the first driving condition and the second driving condition are common, if both the first control and the second control are executable, the execution of the first control takes priority. The reason for this is that when the on-demand mode is selected, it is assumed that the driver wishes to reproduce driving control of the virtual drivable vehicle in the on-demand mode.

In addition, in the embodiment, when the first driving condition and the second driving condition are not common, the first control or the second control is executed. When the first control is executable, if there is no driving control corresponding to the second control in the original driving control, the first control is executed when the first driving condition is satisfied. In other words, if the first driving condition and the second driving condition are not common and only the first control is executable, the first control is executed when the first driving condition is satisfied. The reason for this is the same as why first control execution takes priority.

On the other hand, if the first driving condition and the second driving condition are not common and only the second control is executable, and there is no driving control corresponding to the second control in the on-demand driving control, a question arises as to whether the second control should be executed when the second driving condition is satisfied. The reason for this is that there are two possible options: executing the second control when the second driving condition is met, and respecting the driver's wishes and not executing the second control even if the second driving condition is met.

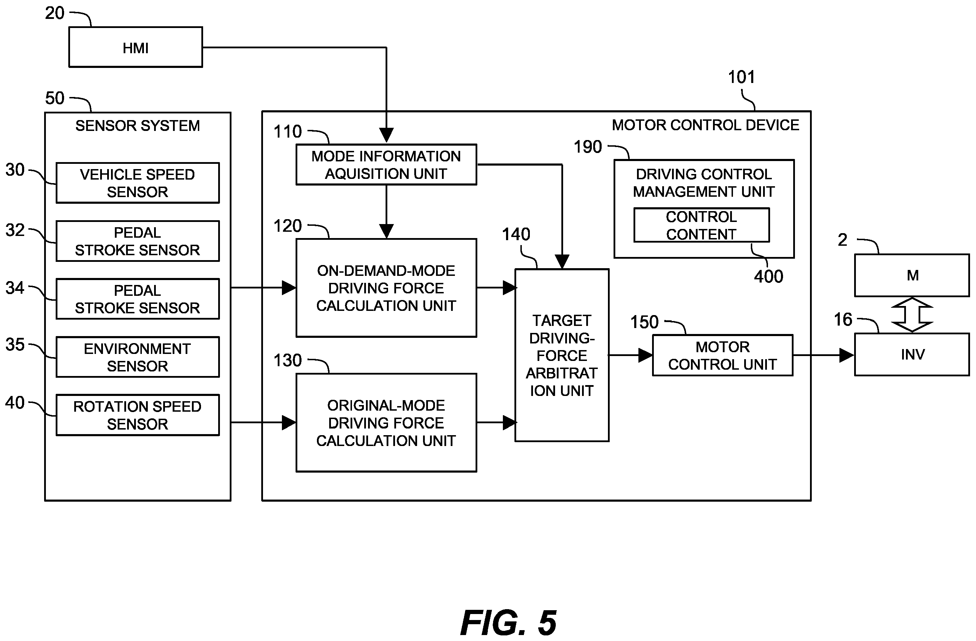

Therefore, in the embodiment, at least when the first control is executable, the first control is executed when the first driving condition is satisfied. In addition, if the first driving condition and the second driving condition are not common and only the second control is executable, the second control is executed when the second driving condition is satisfied. FIG. 5 is a diagram showing a configuration example of motor control function of the control device 101 for executing first control and second control. The configuration example shown in FIG. 5 is essentially the same as that shown in FIG. 2. The difference between the two lies in a driving control management unit 190.

The driving control management unit 190 stores control contents 400 of multiple driving controls. The driving control management unit 190 is mainly realized by the memory device 103. Each of the control contents 400 corresponds to the driving control implemented in each of the multiple virtual drivable vehicles. Each of the control contents 400 includes, for example, an identification number that indicates at least one of a control intent and a control purpose.

For example, the control device 101 compares the identification number of the control content (hereinafter also referred to as a "control content CNT-SMB") which are the driving control implemented in the virtual drivable vehicle and reproduced by the vehicle model 200, with that of the control content (hereinafter also referred to as a "control content CNT-BEV") of the original driving control which is the driving control already implemented in the vehicle 100 and is executed according to the program 104. If these identification numbers match, the control device 101 determines that the control content CNT-SMB and the control content CNT-BEV are the same. The control device 101 also determines that the first driving condition for the first control corresponding to control content CNT-SMB is common to the second driving condition for the second control corresponding to the control content CNT-BEV.

If there is the control content CNT-BEV having an identification number that matches the identification number of the control content CNT-SMB, the control device 101 disables the execution of the second control corresponding to the control content CNT-BEV. On the other hand, if there is no control content CNT-BEV having the identification number matching the identification number of the control content CNT-SMB, the control device 101 does not disable the execution of the second control corresponding to the control content CNT-BEV. In this case, the control device 101 may enable the execution of the second control corresponding to the control content CNT-BEV.

In the example shown in FIG. 5, the target driving-force arbitration unit 140 determines the target driving force of the vehicle 100 based on the disabling information for the second control and the selected mode information obtained from the mode information acquisition unit 110. For example, when the on-demand mode is selected and there is disabling information for the second control, the target driving force calculated by the on-demand-mode driving-force calculation unit 120 is set as the target driving force for the vehicle 100 in order to execute the first control while the first driving condition is satisfied. On the other hand, when the on-demand mode is selected and there is no disabling information for the second control, the target driving force calculated by the original-mode driving-force calculation unit 130 is set as the target driving force for the vehicle 100 such that the second control is executed only while the second driving condition is satisfied.

In this way, when the on-demand mode is selected, the control device 101 switches the target driving force when at least one of the first and second driving conditions is satisfied between that calculated by the on-demand-mode driving-force calculation unit 120 and that calculated by the original-mode driving-force calculation unit 130. This allows the first control to be executed while the first driving condition is satisfied, if the first driving condition and the second driving condition are the same. In addition, if the first driving condition and the second driving condition are not common and the original driving control does not have a driving control corresponding to the first control, the first control can be executed while the first driving condition is satisfied. Furthermore, if the first driving condition and the second driving condition are not common and the on-demand driving control does not have a driving control corresponding to the second control, the second control can be executed while the second driving condition is satisfied.

Note that the "driving control corresponding to the first control" means the original driving control that is executed under a driving condition that is common to the first driving condition. In addition, the "driving control corresponding to the second control" means the on-demand driving control that is executed under a driving condition that is common to the second driving condition.

### 3-2. Example of hill-climb control

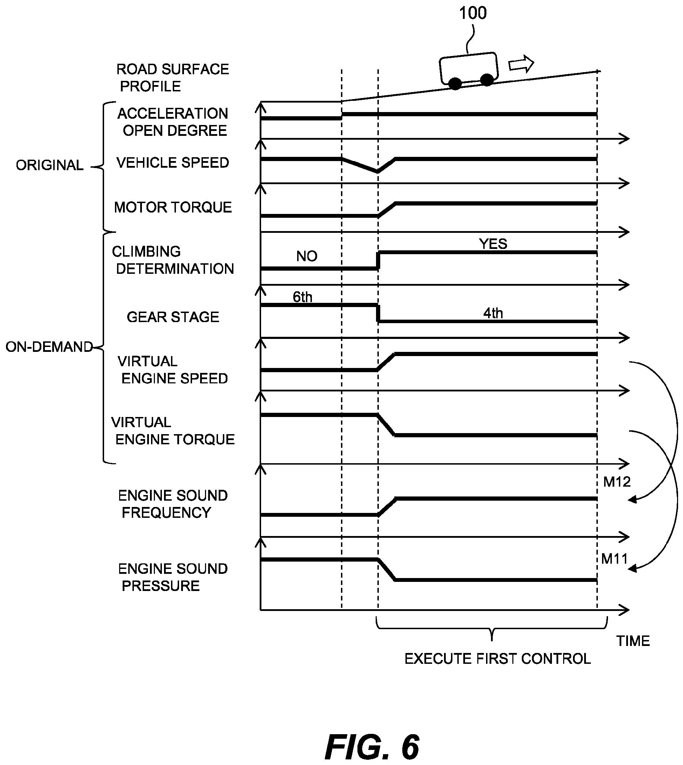

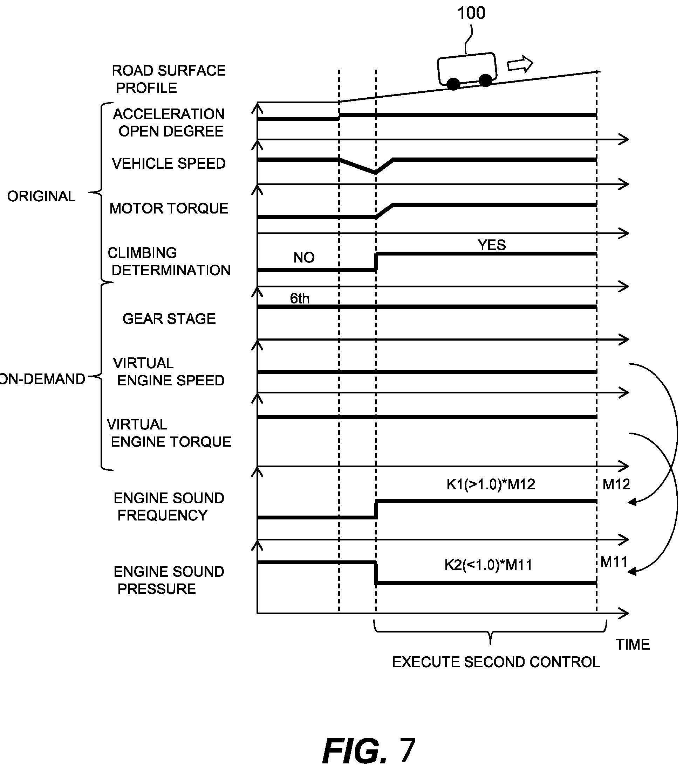

The original driving control and the on-demand driving control will be specifically described using as an example in which hill-climb control is executed when the selected vehicle is an automatic transmission vehicle (an AT vehicle) equipped with an engine. FIG. 6 is an example of a time chart when the first and second controls correspond to the hill-climb control. FIG. 7 is an example of a time chart when the second control corresponds to the hill-climb control and there is no driving control equivalent to the hill-climb control in the on-demand driving control.

In the example shown in FIGS. 6 and 7, vehicle 100 is traveling on an upward slope. Whether the vehicle 100 is traveling on an upward slope is determined based on, for example, a signal from the sensor system 50 or a signal from the driving environment sensor 35. If the first and second controls correspond to the hill-climb control, the first and second driving conditions include vehicle 100 traveling on an upward slope (e.g., traveling on a road surface with a gradient of 5% or more). When it is determined that the first or second driving condition is satisfied, the climbing determination changes from "NO" to "YES."

In the example shown in FIG. 6, the motor torque is constant before the hill climbing determination switches from "NO" to "YES", and therefore the driving speed (the vehicle speed) of the vehicle 100 gradually decreases. However, after the hill-climbing determination changes from "NO" to "YES", hill-climb control as the first control is started, and the gear stage is shifted down from sixth gear to fourth gear. As a result of this downshift, the virtual engine speed calculated based on the vehicle model 200 increases and the virtual engine torque decreases. However, since the target driving force of the vehicle 100 increases, the motor torque increases. This will restore the driving speed of the vehicle 100.

In the example shown in FIG. 6, the engine frequency is also calculated based on the virtual engine speed, and the engine sound pressure is calculated based on the virtual engine torque. The calculation of the engine frequency and the engine sound pressure is executed, for example, based on the frequency map M12 and the sound pressure map M11 described with reference to FIG 4. This allows different virtual engine sounds to be played before and after the hill-climb control is executed as the first control.

In the example shown in FIG. 7, there is no driving control equivalent to the hill-climb control in the on-demand driving control. Therefore, after the hill climbing determination changes from "NO" to "YES", the hill-climb control is started as the second control, and the motor torque increases. This will restore the driving speed of the vehicle 100. Additionally, there is no change in the virtual engine speed and the virtual engine torque before and after the execution of the hill-climb control as the second control.

The fact that there is no change in the virtual engine speed and the virtual engine torque before and after implementing the hill-climb control as the second control means that there is no change in the virtual engine sound either. However, even though the hill-climb control (the second control) is executed and the motor torque and the driving speed change, the virtual engine sound does not change, which gives the driver a feeling of strangeness.

Therefore, in the example shown in FIG. 7, during the execution of the hill-climb control as the second control, the engine frequency calculated based on the virtual engine speed and the engine sound pressure calculated based on the virtual engine torque are adjusted. For example, the engine frequency is multiplied by a coefficient K1 (>1.0), and the engine sound pressure is multiplied by a coefficient K2 (<1.0). This allows different virtual engine sounds to be played before and after the hill-climb control is executed as the second control, eliminating the feeling of strangeness mentioned above.

Incidentally, the example of the driving control explained in FIGS. 6 and 7 can also be applied to descent control when the selected vehicle is the automatic transmission vehicle (AT vehicle) equipped with the engine. The hill-climb control is transmission control that combines the prohibition of upshifting and downshifting while driving on an upward slope, and the purpose of the descent control is basically the same as that of the hill-climb control. Therefore, for example, in the explanation of FIGS. 6 and 7, the "upward slope" is read as a "downward slope," and the downshift from "6th to 4th" is read as "4th to 3rd," and an example of descent control is explained by reversing the direction of change in driving speed (from descending to ascending) before and after the execution of the hill-climb control.

### 3-3. Example of computer processing

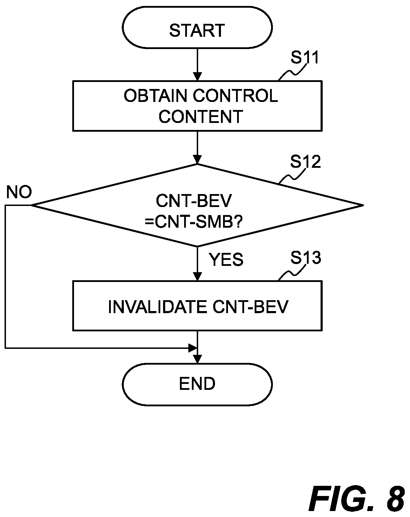

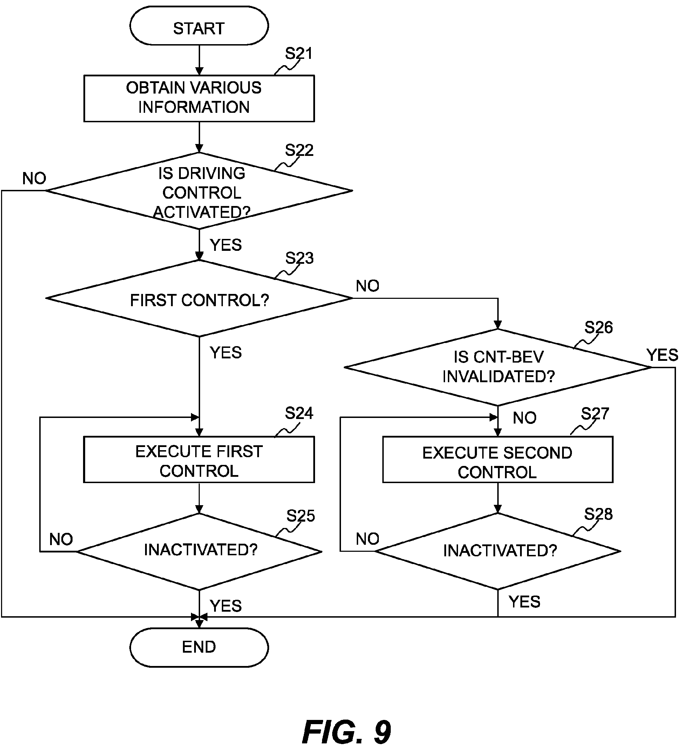

FIGS. 8 and 9 are flow charts showing an example of computer processing executed for an arbitration between the first control and second control. The routine shown in FIG. 8 is repeatedly executed in a predetermined cycle by, for example, the processor 102 shown in FIG.1. The routine shown in FIG. 9 is repeatedly executed by the processor 102 in a predetermined cycle, for example, while the on-demand mode is selected.

In the routine shown in FIG. 8, first, the processing of step S11 is carried out. In the processing of step S11, information relating to the driving control is obtained. The information relating the driving control includes the control content CNT-BEV and the control content CNT-SMB reproduced by the vehicle model 200 of the virtual drivable vehicle. As already explained, the control content CNT-BEV is the driving control already implemented in the vehicle 100 and is the original driving control executed according to the program 104. The control content CNT-SMB is the driving control implemented in the virtual drivable vehicle and is reproduced by the vehicle model 200.

Following the processing of step S11, processing of step S12 is carried out. In the processing of step S12, the control content CNT-BEV and the control content CNT-SMB are compared. Then, it is determined whether there is the control content CNT-SMB whose control content is common to the control content CNT-BEV. This determination is performed, for example, by comparing the identification number of the control content CNT-BEV with that of the control content CNT-SMB. If the judgment result in step S12 is negative, processing ends.

If the judgment result in step S12 is positive, processing proceeds to step S13. In the processing of step S13, the execution of the control content CNT-SMB and the control content CNT-BEV, which have common control content, is invalidated. The disabling information for the control content CNT-BEV is stored in the memory device 103.

In the routine shown in FIG. 9, first, the processing of step S21 is carried out. In the processing of step S21, various information is acquired. The various information includes information about the selected vehicle and information about the driving control. The information about the driving control includes information about the original driving control and information about the on-demand driving control. The information about the original driving control includes the control content CNT-BEV, the disabling information for the control content CNT-BEV, and the second driving condition. The information about the on-demand driving control includes the control content CNT-SMB reproduced by the vehicle model 200 of the selected vehicle and the first driving condition.

Following the processing of step S21, processing of step S22 is carried out. In the processing of step S22, it is determined whether there is a driving control (i.e., an original driving control or an on-demand driving control) that is to be activated. The target of the processing of step S22 is the first and second driving conditions acquired in the processing of step S21. If the judgment result in step S22 is negative, processing ends.

If the judgment result in step S22 is positive, processing proceeds to step S23. In the processing of step S23, it is determined whether the driving control to be activated is the first control. When the first driving condition is satisfied, the execution condition of the first control is turned to be activated, and when the second driving condition is satisfied, the execution condition of the second control is activated. Therefore, if it is determined in the processing of step S22 that the first driving condition is satisfied, it is determined in the processing of step S23 that the driving control to be activated is the first control. On the other hand, if it is determined in the processing of step S22 that the second driving condition is satisfied, it is determined in the processing of step S23 that the driving control to be activated is the second control.

If the judgment result in step S23 is positive, the processing goes to step S24. In the processing of step S24, the first control is executed. During execution of the first control, the processing of step S25 is carried out. In the processing of step S25, it is repeatedly determined whether the execution condition of the first control is turned to be inactivated based on the first driving condition. If the judgment result in step S25 is negative, the processing returns to step S24. That is, the processing of steps S24 and S25 are repeatedly executed until a positive judgment result is obtained in the processing of step S25.

If the judgment result in step S23 is negative, processing proceeds to step S26. In the processing of step S26, it is determined whether the execution of the control content CNT-BEV is invalid. As explained in FIG. 8, the control content CNT-SMB and the control content CNT-BEV, which share the same control content, is disabled. If the disabling information for the control content CNT-BEV is acquired in the processing of step S21, it is determined that the execution of the control content CNT-BEV is invalid. If the judgment result in step S26 is positive, processing ends.

If the judgment result in step S26 is negative, processing proceeds to step S27. In the processing of step S27, the second control is executed. During the execution of the second control, processing of step S28 is carried out. In the processing of step S28, it is repeatedly determined whether the execution condition of the second control is inactivated based on the second driving condition. If the judgment result in step S28 is negative, processing returns to step S27. That is, the processing of steps S27 and S28 are repeatedly executed until a positive judgment result is obtained in the processing of step S28.

## Claims

1. A control device for a vehicle (100) powered by an electric motor (2), comprising:
one or more memory devices (103) in which a program for an original driving control (104) implemented in the vehicle (100), and a vehicle model for on-demand driving control (200) that simulates the driving of a virtual drivable vehicle in response to a request from an occupant of the vehicle (100) are stored; and
one or more processing circuitry (102) configured to execute the original driving control or the on-demand driving control,
**characterized in that** the one or more processing circuitry (102) is configured to:
when there is an execution request for the on-demand driving control, if the on-demand driving control includes a first control executed under a first driving condition of the vehicle, execute the first control when the first driving condition is satisfied; and
when there is the execution request, if the original driving control includes a second control executed under a second driving condition of the vehicle and the on-demand driving control does not include driving control corresponding to the second control, execute the second control when the second driving condition is satisfied.

2. The control device according to claim 1,
wherein the one or more processing circuitry (102) is configured to:
when there is the execution request and the on-demand driving control includes the first control, execute the first control when the first driving condition is satisfied, regardless of whether the original driving control includes the driving control corresponding to the first control.

3. The control device according to claim 1 or 2, wherein:
at least one of the first and second driving conditions includes the vehicle traveling on an upward slope; and
at least one of the first and second controls includes hill-climb control.

4. The control device according to claim 3, wherein:
the virtual drivable vehicle includes an engine vehicle that travels by engine drive; and
the one or more memory devices (103) further store an engine sound source for performing sound control (300) to output an engine sound generated by the engine vehicle into a room of the vehicle (100),
wherein, in the sound control, the one or more processing circuitry (102) is configured to:
when a target of the execution request is the driving control of the engine vehicle and the first control corresponds to the hill-climb control, generate an engine sound generated in association with the execution of the hill-climb control as the first control based on the engine sound source (300) and a virtual engine torque and a virtual engine speed of the engine vehicle calculated using the vehicle model (200); and
when the target of the execution request is the driving control of the engine vehicle, the second control corresponds to the hill-climb control, and the on-demand driving control does not include the hill-climb control, generate an engine sound generated in association with the on-demand driving control during the hill-climb control as the second control based on the engine sound source (300) and a virtual engine torque and a virtual engine speed of the engine vehicle calculated using the vehicle model (200),
wherein the engine sound generated during the hill-climb control as the second control is generated by adjusting at least one of the virtual engine torque and the virtual engine speed of the engine vehicle calculated using the vehicle model (200).

5. The control device according to any one of claims 1 to 4, wherein:
at least one of the first and second driving conditions includes the vehicle traveling on a downward slope; and
at least one of the first and second controls includes a descent control.

6. The control device according to claim 5, wherein:
the virtual drivable vehicle includes an engine vehicle that travels by engine drive; and
the one or more memory devices (103) further store an engine sound source for performing sound control (300) to output an engine sound generated by the engine vehicle into a room of the vehicle (100),
wherein, in the sound control, the one or more processing circuitry (102) is configured to:
when a target of the execution request is driving control of the engine vehicle and the first control corresponds to the descent control, generate an engine sound generated in association with the execution of the descent control as the first control based on the engine sound source (300) and a virtual engine torque and a virtual engine speed of the engine vehicle calculated using the vehicle model (200); and
when the target of the execution request is driving control of the engine vehicle, the second control corresponds to the descent control, and the on-demand driving control does not include the descent control, generate an engine sound generated in association with the on-demand driving control during the descent control as the second control based on the engine sound source (300) and virtual engine torque and virtual engine speed of the engine vehicle calculated using the vehicle model (200),
wherein the engine sound during the descent control as the second control is generated by adjusting at least one of the virtual engine torque and the virtual engine speed of the engine vehicle calculated using the vehicle model (200).

7. A control method for a vehicle (100) powered by an electric motor (2), the control method causes a computer (101) to execute an original driving control implemented in the vehicle (100) or an on-demand driving control that simulates driving of a virtual drivable vehicle in response to a request from an occupant of the vehicle (100), **characterized in that**:
when there is an execution request for the on-demand driving control, if the on-demand driving control includes a first control executed under a first driving condition of the vehicle, the computer (101) executes the first control when the first driving condition is satisfied; and
when there is the execution request, if the original driving control includes a second control executed under a second driving condition of the vehicle and the on-demand driving control does not include driving control corresponding to the second control, the computer (101) executes the second control when the second driving condition is satisfied.

8. The control method according to claim 7, wherein:
when there is the execution request and the on-demand driving control includes the first control, the computer (101) executes the first control when the first driving condition is satisfied, regardless of whether the original driving control includes the driving control corresponding to the first control.
